# EUROPEAN PATENT APPLICATION

(11) **EP 4 826 828 A1**
(43) Date of publication of application: **21.10.2026**
(21) Application number: 23961473.8
(22) Date of filing: 13.12.2023
(51) Int. Cl.: H01M 10/0585, H01M 4/13, H01M 4/139, H01M 4/66, H01M 10/052

(54) **LITHIUM SECONDARY BATTERY AND METHOD FOR MANUFACTURING LITHIUM SECONDARY BATTERY**

(71) Applicant: TERAWATT TECHNOLOGY K.K., Yokohama-shi, Kanagawa 226-0026 (JP)
(72) Inventor: FUJIKI, Satoshi, Yokohama-shi, Kanagawa 226-0026 (JP); MIYAKE, Minoru, Yokohama-shi, Kanagawa 226-0026 (JP); OYAMA, Gosuke, Yokohama-shi, Kanagawa 226-0026 (JP); OGATA, Ken, Yokohama-shi, Kanagawa 226-0026 (JP)
(74) Representative: FRKelly
(86) International application number: PCT/JP2023/044741
(87) International publication number: WO 2025/126407

(57) **Abstract**

Provided is a technique for suppressing a decrease in cell capacity while suppressing a short circuit between a positive electrode and a negative electrode. The present invention relates to a lithium secondary battery including a positive electrode and a negative electrode which face each other with a separator being interposed between the positive electrode and the negative electrode, in which the positive electrode includes a positive electrode current collector configured to sandwich a resin layer between a first metal layer and a second metal layer, and a positive-electrode active material layer provided on the positive electrode current collector, the first metal layer includes a first portion in which the positive-electrode active material layer is not provided, the second metal layer includes a second portion in which the positive-electrode active material layer is not provided, and the first portion and the second portion have different dimensions in both a width direction and a length direction.

## Description

### Technical Field

Exemplary embodiments according to the present disclosure relate to a lithium secondary battery and a method for manufacturing a lithium secondary battery.

### Background Art

Patent Literature 1 discloses that an insulating coating film is provided on a positive electrode to prevent a short circuit between the positive electrode and a negative electrode.

### Citation List

### Patent Literature

Patent Literature 1: International Publication No. 2017/057762

### Summary of Invention

### Technical Problem

The present disclosure provides a technique for suppressing a decrease in cell capacity while suppressing a short circuit between a positive electrode and a negative electrode in a lithium secondary battery.

### Solution to Problem

In one exemplary embodiment according to the present disclosure, there is provided a lithium secondary battery including a positive electrode and a negative electrode which face each other with a separator being interposed between the positive electrode and the negative electrode, in which the positive electrode includes a positive electrode current collector configured to sandwich a resin layer between a first metal layer and a second metal layer, and a positive-electrode active material layer provided on the positive electrode current collector, the first metal layer includes a first portion in which the positive-electrode active material layer is not provided, the second metal layer includes a second portion in which the positive-electrode active material layer is not provided, and the first portion and the second portion have different dimensions in both a width direction and a length direction. **Advantageous Effect of Invention**

According to one exemplary embodiment according to the present disclosure, it is possible to provide a technique for suppressing a decrease in cell capacity while suppressing a short circuit between a positive electrode and a negative electrode.

### Brief Description of Drawings

[Figure 1] Figure 1 is a perspective view for describing a configuration example of a lithium secondary battery according to one embodiment.
[Figure 2A] Figure 2A is a view for describing an example of a negative electrode.
[Figure 2B] Figure 2B is a view for describing another example of the negative electrode.
[Figure 2C] Figure 2C is a view for describing another example of the negative electrode.
[Figure 2D] Figure 2D is a view for describing another example of the negative electrode.
[Figure 3] Figure 3 is a view for describing an example of a positive electrode 30.
[Figure 4A] Figure 4A is a view for describing a first metal layer 312a.
[Figure 4B] Figure 4B is a view for describing a second metal layer 312b.
[Figure 5A] Figure 5A is a view for describing a disposition example of the positive electrode and the negative electrode.
[Figure 5B] Figure 5B is a view for describing a disposition example of the positive electrode and the negative electrode.
[Figure 6A] Figure 6A is a view for describing another example of a first portion 33.
[Figure 6B] Figure 6B is a view for describing another example of the first portion 33.
[Figure 7] Figure 7 is a flowchart illustrating an example of a method for manufacturing a secondary battery 1.
[Figure 8A] Figure 8A is a view for describing a step of forming a positive electrode of the secondary battery 1.
[Figure 8B] Figure 8B is a view for describing a step of forming the positive electrode of the secondary battery 1.
[Figure 8C] Figure 8C is a view for describing a step of forming the positive electrode of the secondary battery 1.
[Figure 9A] Figure 9A is a view for describing another example of cutting out a positive electrode material.
[Figure 9B] Figure 9B is a view for describing another example of cutting out the positive electrode material.
[Figure 10] Figure 10 is a view for describing an example of the effect of adopting a cutting line L1.
[Figure 11] Figure 11 is a view illustrating configurations and results of Examples and Comparative Examples.

### Description of Embodiments

Hereinafter, each embodiment according to the present disclosure will be described.

In one exemplary embodiment, there is provided a lithium secondary battery including a positive electrode and a negative electrode which face each other with a separator being interposed between the positive electrode and the negative electrode, in which the positive electrode includes a positive electrode current collector configured to sandwich a resin layer between a first metal layer and a second metal layer, and a positive-electrode active material layer provided on the positive electrode current collector, the first metal layer includes a first portion in which the positive-electrode active material layer is not provided, the second metal layer includes a second portion in which the positive-electrode active material layer is not provided, and the first portion and the second portion have different dimensions in both a width direction and a length direction.

In one exemplary embodiment, the first portion includes one end and the other end in the length direction, the one end of the first portion overlaps with the negative electrode in a plan view, the other end of the first portion does not overlap with the negative electrode in the plan view, the second portion includes one end and the other end in the length direction, the one end of the second portion overlaps with the negative electrode in a plan view, and the other end of the second portion does not overlap with the negative electrode in the plan view.

In one exemplary embodiment, the one end of the first portion and the one end of the second portion have different width dimensions.

In one exemplary embodiment, the other end of the first portion and the other end of the second portion have the same width dimension.

In one exemplary embodiment, the one end of the first portion has the same width dimension as a portion of the first metal layer in which the positive-electrode active material layer is provided.

In one exemplary embodiment, the one end of the second portion has a smaller width dimension than a portion of the second metal layer in which the positive-electrode active material layer is provided.

In one exemplary embodiment, the first portion includes a first rectangular region having a first width dimension and a second rectangular region having a second width dimension smaller than the first width dimension.

In one exemplary embodiment, the first width dimension is the same as a width dimension of a portion of the first metal layer in which the positive-electrode active material layer is provided.

In one exemplary embodiment, the second portion includes a rectangular region having the same shape as the second rectangular region.

In one exemplary embodiment, the first portion includes one end and the other end in the length direction, the second portion includes one end and the other end in the length direction, the negative electrode includes one end and the other end in the length direction, and the one end of the negative electrode is disposed between the one end of the first portion and the other end of the first portion in a plan view, and disposed between the one end of the second portion and the other end of the second portion in the plan view.

In one exemplary embodiment, a distance in the plan view from the one end of the first portion to the one end of the negative electrode is longer than a distance in the plan view from the one end of the second portion to the one end of the negative electrode.

In one exemplary embodiment, the distance in the plan view from the one end of the first portion to the one end of the negative electrode is 3 mm or less.

In one exemplary embodiment, the distance in the plan view from the one end of the second portion to the one end of the negative electrode is 0.25 mm or more.

In one exemplary embodiment, there is provided a lithium secondary battery including a positive electrode and a negative electrode which face each other with a separator being interposed between the positive electrode and the negative electrode, in which the positive electrode includes a positive electrode current collector configured to sandwich a resin layer between a first metal layer and a second metal layer, and a positive-electrode active material layer provided on the positive electrode current collector, and the first metal layer includes a first portion in which the positive-electrode active material layer is not provided, the first portion includes a first region and a second region, the first region has one end and the other end in a length direction and has a first width dimension, and the second region extends in the length direction from a part of the other end of the first region and has a second width dimension smaller than the first width dimension.

In one exemplary embodiment, the first region entirely overlaps with the negative electrode in a plan view, and the second region partially overlaps with the negative electrode and partially does not overlap with the negative electrode in the plan view.

In one exemplary embodiment, the second metal layer includes a second portion in which the positive-electrode active material layer is not provided, and the second portion includes a region having the same shape as the second region.

In one exemplary embodiment, the negative electrode includes a negative electrode current collector and a negative-electrode active material layer provided on the negative electrode current collector.

In one exemplary embodiment, the negative electrode includes a negative electrode current collector configured to sandwich a resin layer between a pair of metal layers.

In one exemplary embodiment, there is provided a laminate in which a plurality of sets of the positive electrode, the separator, and the negative electrode is laminated.

In one exemplary embodiment, there is provided a method for manufacturing a lithium secondary battery, the method including preparing a positive electrode material, in which the positive electrode material includes a positive electrode current collector configured to sandwich a resin layer between a first metal layer and a second metal layer, and a positive-electrode active material layer provided on the positive electrode current collector; and cutting out the positive electrode material to form a positive electrode, in which in the positive electrode, the first metal layer includes a first portion in which the positive-electrode active material layer is not provided, the second metal layer includes a second portion in which the positive-electrode active material layer is not provided, and the first portion and the second portion have different dimensions in both a width direction and a length direction.

Hereinafter, each embodiment according to the present disclosure will be described in detail with reference to the drawings. It is noted that, in each drawing, the same or similar elements are denoted by the same reference numerals, and redundant descriptions thereof will be omitted. Unless otherwise specified, positional relationships such as up, down, left, and right will be described based on the positional relationships illustrated in the drawings. The dimensional ratios in the drawings do not indicate the actual ratios, and the actual ratios are not limited to the ratios illustrated in the drawings.

### <Configuration example of secondary battery>

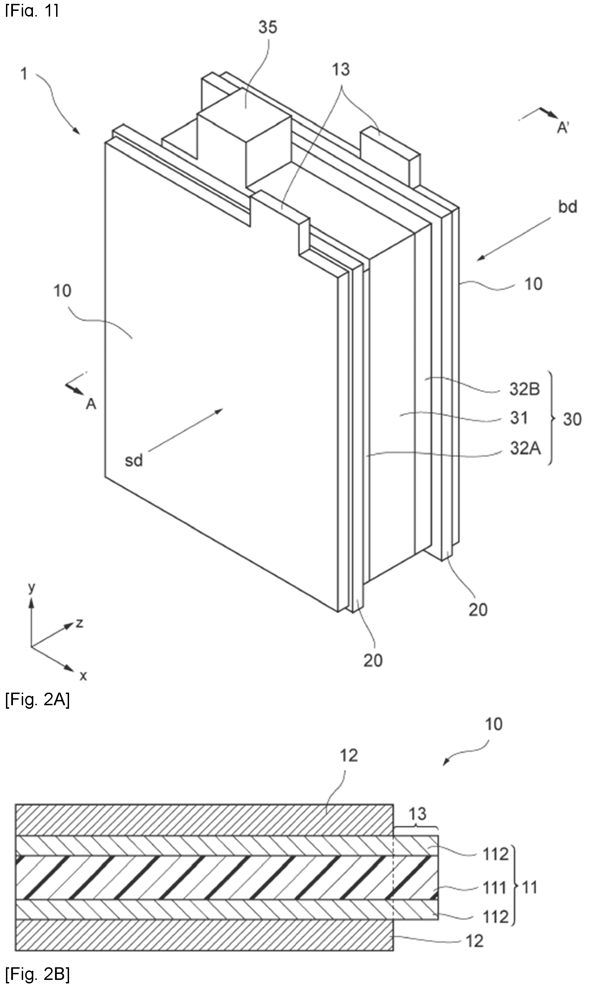

Figure 1 is a perspective view for describing a configuration example of a lithium secondary battery 1 (hereinafter, also referred to as a "secondary battery 1") according to one embodiment. As illustrated in Figure 1, in one embodiment, the secondary battery 1 is configured to include a negative electrode 10, a separator 20, and a positive electrode 30. The negative electrode 10, the separator 20, and the positive electrode 30 are disposed in this order along a z direction (hereinafter, also referred to as a "lamination direction"; in addition, viewing the secondary battery 1 from the lamination direction is also referred to as "in a plan view") of Figure 1. That is, the negative electrode 10 and the positive electrode 30 face each other with the separator 20 being interposed therebetween. Each of the negative electrode 10, the separator 20, and the positive electrode 30 has a main surface extending in a length direction (y direction) and a width direction (x direction).

In one embodiment, the secondary battery 1 may be configured to laminate a plurality of sets of the negative electrode 10, the separator 20, and the positive electrode 30 in the lamination direction. The number of laminations may be 10 or more and 30 or less, or may be 15 or more and 25 or less. In one embodiment, the total number of negative electrodes 30 included in the secondary battery 1 may be 5 or more, 10 or more, or 20 or more. In one embodiment, the total number of positive electrodes 30 included in the secondary battery 1 may be 5 or more, 10 or more, or 20 or more. In one embodiment, the total number of negative electrodes 10 included in the secondary battery 1 may be 50 or less, 40 or less, or 30 or less. In one embodiment, the total number of positive electrodes 30 included in the secondary battery 1 may be 50 or less, 40 or less, or 30 or less. In one embodiment, the energy density of the secondary battery 1 may be 300 Wh/kg or more. In one embodiment, the rated capacity of the secondary battery 1 may be 1.5 Ah or more, or 5 Ah or more. Hereinafter, the details of each configuration of the secondary battery 1 will be described.

### 1. Negative electrode

As illustrated in Figure 1, the negative electrode 10 has a negative electrode end portion 13. The negative electrode end portion 13 extends in a length direction (y direction) along a direction parallel to a main surface of the negative electrode 10. The negative electrode 10 is electrically connected to an external circuit through the negative electrode end portion 13. When the secondary battery 1 includes a plurality of the negative electrodes 10, the respective negative electrode end portions 13 are electrically connected to each other. The respective negative electrode end portions 13 may be joined to each other by, for example, welding.

Figure 2A is a view for describing an example of a negative electrode. As illustrated in Figure 2A, in one embodiment, the negative electrode 10 is configured to include a negative electrode current collector 11 and a negative-electrode active material layer 12 disposed on the negative electrode current collector 11. In one embodiment, the negative electrode current collector 11 may be composed of a negative electrode resin layer 111 and a pair of negative electrode metal layers 112 disposed to sandwich the negative electrode resin layer 111. In one embodiment, the negative electrode resin layer 111 may be formed of a sheet-shaped (film-shaped) or fibrous resin. In one embodiment, the negative electrode metal layer 112 is formed of at least one selected from the group consisting of Cu, Ni, Ti, Fe, a metal that does not react with Li, as well as an alloy thereof, and stainless steel. The negative electrode metal layer 112 is, for example, Cu. Since the negative electrode 10 includes the negative electrode resin layer 111, the weight of the negative electrode 10 can be reduced as compared with a case where the negative electrode 10 is composed of only the negative electrode metal layer 112, while ensuring the thickness (rigidity) required for the negative electrode 10. It is noted that, in one embodiment, the negative electrode current collector 11 may be composed of only the negative electrode metal layer 112 without including the negative electrode resin layer 111.

The negative-electrode active material layer 12 contains a negative-electrode active material. The negative-electrode active material is a material that causes an electrode reaction, that is, an oxidation reaction and a reduction reaction, in the negative electrode. The negative-electrode active material may be, for example, a lithium metal, an alloy containing a lithium metal, a carbon-based substance, a metal oxide, a metal to be alloyed with lithium, an alloy containing the metal, or the like. The carbon-based substance may be, for example, graphene, graphite, hard carbon, carbon nanotube, or the like. The metal oxide may be, for example, a titanium oxide-based compound, a cobalt oxide-based compound, or the like. The metal to be alloyed with lithium may be, for example, silicon, silicon oxide, germanium, tin, lead, aluminum, gallium, and a material in which these metals are pre-doped with lithium.

The content of the negative-electrode active material may be 60.0% by mass or more and 100% by mass or less with respect to the total amount of the negative-electrode active material layer 12.

The negative-electrode active material layer 12 may contain a binder, a conductive auxiliary agent, and other additives, in addition to the negative-electrode active material.

The binder is not particularly limited, and examples thereof include polyvinylidene fluoride; modified polyvinylidene fluoride in which a functional group such as a hydroxyl group, an amino group, a carbonyl group, a carboxyl group, a phenyl group, or a methyl group is introduced into polyvinylidene fluoride; polytetrafluoroethylene; modified polytetrafluoroethylene in which a functional group such as a hydroxyl group, an amino group, a carbonyl group, a carboxyl group, a phenyl group, or a methyl group is introduced into polytetrafluoroethylene; a block copolymer, a random copolymer, or a graft copolymer, which has tetrafluoroethylene as a constitutional unit; styrene-butadiene rubber; carboxymethyl cellulose; an acrylic resin; a polyimide resin; and the like. One kind of binder may be used alone, or two or more kinds thereof may be used in combination.

The content of the binder may be 0.5% by mass or more and 10.0% by mass or less with respect to the total amount of the negative-electrode active material layer 12.

The conductive auxiliary agent is not particularly limited, and examples thereof include carbon black, single-wall carbon nanotube (SWCNT), multi-wall carbon nanotube (MWCNT), carbon nanofiber (CF), and acetylene black. One kind of conductive auxiliary agent may be used alone, or two or more kinds thereof may be used in combination.

The content of the conductive auxiliary agent may be 0.0% by mass or more and 30.0% by mass or less with respect to the total amount of the negative-electrode active material layer 12.

In one embodiment, the thickness of the negative electrode 10 may be 3.0 µm or more and 300.0 µm or less.

In one embodiment, the thickness of the negative-electrode active material layer 12 may be 3.0 µm or more and 150.0 µm or less.

As illustrated in Figure 2A, the negative-electrode active material layer 12 is not formed on the negative electrode end portion 13. The negative electrode end portion 13 is composed of the same member as the negative electrode current collector 11. It is noted that, in one embodiment, the negative electrode end portion 13 may be composed as a member different from the negative electrode current collector 11.

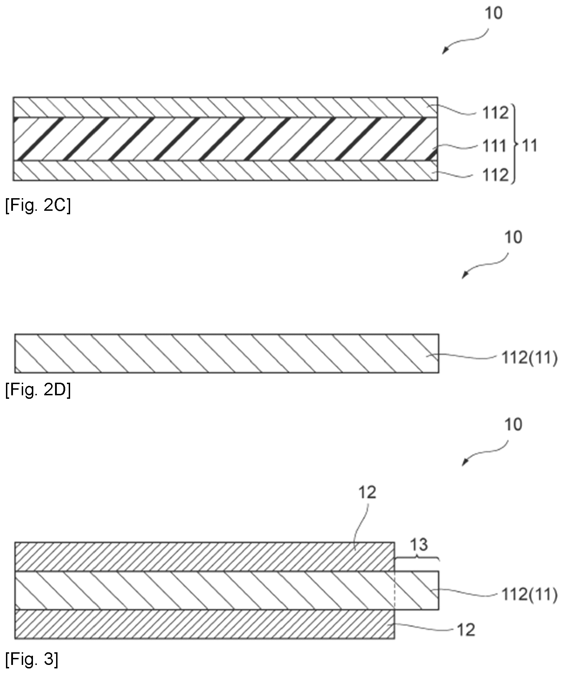

Figure 2B to Figure 2D are views for describing another example of the negative electrode. In one embodiment, as illustrated in Figure 2B, the negative electrode 10 may be composed of the negative electrode current collector 11 composed of the negative electrode resin layer 111 and a pair of negative electrode metal layers 112 disposed to sandwich the negative electrode resin layer 111. In one embodiment, as illustrated in Figure 2C, the negative electrode 10 may be composed of the negative electrode current collector 11 composed of only the negative electrode metal layer 112 without including the negative electrode resin layer 111. In one embodiment, as illustrated in Figure 2D, the negative electrode 10 may be configured to include the negative electrode current collector 11 composed of only the negative electrode metal layer 112 without including the negative electrode resin layer 111, and to include the negative-electrode active material layer 12 disposed on the negative electrode current collector 11.

In one embodiment, as illustrated in Figure 2B and Figure 2C, the negative electrode 10 may be composed of the negative electrode metal layer 112 or may be composed of the negative electrode resin layer 111 and the negative electrode metal layer 112. In this case, the negative electrode metal layer 112 may be formed of at least one selected from the group consisting of Cu, Ni, Ti, Fe, other metals that do not react with Li, as well as alloys thereof, and stainless steel (SUS). The "metal that does not react with Li" may be a metal that does not form an alloy by reacting with a lithium ion or lithium metal in the operation state of the secondary battery 1.

In one embodiment, as illustrated in Figure 2B and Figure 2C, the negative electrode 10 substantially does not have the negative-electrode active material layer 12. For example, the layer thickness of the negative-electrode active material layer 12 deposited on the negative electrode 10 at the end of discharge (for example, in a state where the open circuit voltage of the battery is 2.5 V or more and 3.6 V or less) may be 25 µm or less. In one embodiment, the layer thickness of the negative-electrode active material layer 12 at the end of discharge may be 20 µm or less, 15 µm or less, 10 µm or less, or 5 µm or less, and may be 0 µm. Since the negative electrode 10 substantially does not have the negative-electrode active material layer 12, the energy density per volume can be improved in addition to the weight energy density. It is noted that, in this case, the secondary battery 1 can also be referred to as an "anode-free lithium battery", a "zero-anode lithium battery", or an "anodeless lithium battery". It is noted that, in one embodiment, as illustrated in Figure 2A and Figure 2D, the negative electrode 10 may have the negative-electrode active material layer 12.

In one embodiment, as illustrated in Figure 2B and Figure 2C, the negative electrode 10 does not have the negative-electrode active material layer 12 before the initial charging of the battery (in a state from the assembly of the battery to the first charging). That is, in the secondary battery 1, after the initial charging, the lithium metal may be deposited on the negative electrode, and the deposited lithium metal may be electrolytically dissolved to carry out charging/discharging. In this case, the volume and mass occupied by the negative-electrode active material are suppressed, the volume and mass of the entire battery are reduced, and the energy density is increased in principle. It is noted that the phrase "lithium metal is deposited on the negative electrode" includes not only the deposition of the lithium metal on the surface of the negative electrode but also the deposition of the lithium metal on the surface of the solid electrolyte interface (SEI) layer or the surface or inside of the buffer functional layer. It is noted that the buffer functional layer has a solid portion (including a gel-like portion) having ion conductivity and electronic conductivity, and a void portion composed of a gap in the solid portion. In this case, the lithium metal can be deposited on the surface of the negative electrode 10 (the interface between the negative electrode 10 and the buffer functional layer) and/or inside the buffer functional layer (the surface of the solid portion of the buffer functional layer).

In one embodiment, when the negative electrode 10 does not have the negative-electrode active material layer 12, and when the mass of the lithium metal deposited on the negative electrode in a state where the voltage is 4.2 V is denoted as M_{4.2} and the same mass of the lithium metal in a state where the voltage is 3.0 V is denoted as M_{3.0}, M_{3.0}/M_{4.2} may be 40% or less or 35% or less. In one embodiment, the ratio M_{3.0}/M_{4.2} may be 1.0% or more, 2.0% or more, 3.0% or more, or 4.0% or more.

In one embodiment, the thickness of the negative electrode 10 not having the negative-electrode active material layer 12 may be 1.0 µm or more and 30 µm or less. As a result, the volume occupied by the negative electrode 10 in the secondary battery 1 can be reduced, and the energy density can be improved. The thickness of the negative electrode 10 may be 2.0 µm or more and 20 µm or less, 2.0 µm or more and 18 µm or less, or 3.0 µm or more and 15 µm or less.

### 2. Separator

As illustrated in Figure 1, the separator 20 is disposed between the negative electrode 10 and the positive electrode 30. The separator 20 physically and/or electrically isolates the negative electrode 10 and the positive electrode 30 from each other, and ensures the ion conductivity of lithium ions. In one embodiment, the separator 20 may be at least one selected from the group consisting of an insulating porous member, a polymer electrolyte, a gel electrolyte, and an inorganic solid electrolyte. As the separator 20, one kind of member may be used alone, or two or more kinds of members may be used in combination.

When the separator 20 includes an insulating porous member, the pores of the porous member are filled with a substance having ion conductivity (an electrolyte solution, a polymer electrolyte, and/or a gel electrolyte and the like). As a result, the separator 20 exhibits ion conductivity. The material constituting the insulating porous member is not particularly limited, and examples thereof include an insulating polymer material. Specific examples thereof include polyethylene (PE) and polypropylene (PP). That is, the separator 20 may be a porous polyethylene (PE) film, a porous polypropylene (PP) film, or a laminated structure thereof.

In one embodiment, one surface or both surfaces of the separator 20 may be coated with a separator coating layer. As a result, the cycle characteristics of the secondary battery 1 can be improved. In one embodiment, the separator coating layer may be a continuous film having a uniform thickness in an area of 50% or more of the surface of the separator 20. In one embodiment, the separator coating layer may include a binder such as polyvinylidene fluoride (PVDF), a composite material of styrene-butadiene rubber and carboxymethyl cellulose (SBR-CMC), and polyacrylic acid (PAA). In one embodiment, the separator coating layer may be configured by adding inorganic particles such as silica, alumina, titania, zirconia, or magnesium hydroxide to the above-described binder.

In one embodiment, the thickness of the separator 20 (including the coating layer when the separator 20 includes the coating layer) may be 3.0 µm or more and 40 µm or less. As a result, the volume occupied by the separator 20 can be reduced while isolating the negative electrode 10 and the positive electrode laminate 30 from each other. In one embodiment, the thickness of the separator 20 may be 5.0 µm or more, 7.0 µm or more, or 10 µm or more. In one embodiment, the thickness of the separator 20 may be 30 µm or less, 20 µm or less, or 10 µm or less.

### 3. Electrolyte solution

In one embodiment, the secondary battery 1 may include an electrolyte solution. The electrolyte solution is a liquid containing a solvent and an electrolyte, and has ion conductivity. The electrolyte solution may be referred to as a liquid electrolyte, and acts as a conduction path for lithium ions. Therefore, when the secondary battery 1 has an electrolyte solution, the internal resistance is reduced, and the energy density, the capacity, and the cycle characteristics can be improved.

The electrolyte solution may be, for example, a solution with which a housing (not illustrated in Figure 1) accommodating the secondary battery 1 is filled. In addition, for example, the electrolyte solution may be infiltrated into the separator 20, and may constitute a polymer electrolyte or a gel electrolyte by being held in a polymer.

The electrolyte contained in the electrolyte solution may be, for example, a lithium salt. The lithium salt may be, for example, one kind or a combination of two or more kinds selected from the group consisting of LiI, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄.

The solvent contained in the electrolyte solution is not particularly limited, and examples thereof include a chain-like carbonate, a cyclic carbonate, a chain-like ether, and other solvents other than these solvents. One kind of solvent may be used alone, or two or more kinds thereof may be used in combination.

The chain-like carbonate is a carbonate having no cyclic structure such as an aromatic ring, an alicyclic ring, an isocyclic ring, and a heterocyclic ring. The chain-like carbonate is not particularly limited, and examples thereof include dimethyl carbonate (DMC), diethyl carbonate, ethyl methyl carbonate (EMC), and a compound in which a part or all of hydrogen atoms in these carbonates are substituted with fluorine.

The cyclic carbonate is a carbonate having a cyclic structure such as an aromatic ring, an alicyclic ring, an isocyclic ring, and a heterocyclic ring. The cyclic carbonate is not particularly limited, and examples thereof include ethylene carbonate (EC), propylene carbonate, chloroethylene carbonate, and a compound in which a part or all of hydrogen atoms in these carbonates are substituted with fluorine.

The chain-like ether is an ether having no cyclic structure such as an aromatic ring, an alicyclic ring, an isocyclic ring, and a heterocyclic ring. The chain-like ether is not particularly limited, and examples thereof include 1,1,2,2-tetrafluoroethyl-2,2,3,3-tetrafluoropropyl ether, 1,1,2,2-tetrafluoroethyl-2,2,2-trifluoroethyl ether, 1H,1H,5H-octafluoropentyl-1,1,2,2-tetrafluoroethyl ether, triethylene glycol dimethyl ether, tetraethylene glycol dimethyl ether, dimethoxyethane, diethoxyethane, dimethoxypropane, dimethoxybutane, and diethylene glycol dimethyl ether.

The other solvents are not particularly limited, and examples thereof include acetonitrile, methyl acetate, ethyl acetate, propyl acetate, methyl propionate, ethyl propionate, 12-crown-4, trimethyl phosphate, triethyl phosphate, a derivative of 1,1,2,2-tetrafluoroethyl-2,2,3,3-tetrafluoropropyl ether, a derivative of 1,1,2,2-tetrafluoroethyl-2,2,2-trifluoroethyl ether, and a derivative of 1H,1H,5H-octafluoropentyl-1,1,2,2-tetrafluoroethyl ether.

The total amount of the chain-like carbonate and the cyclic carbonate is not particularly limited with respect to the total amount of the solvent; however, it is, for example, 40% by volume or more and 100% by volume or less, 60% by volume or more and 100% by volume or less, or 80% by volume or more and 100% by volume or less.

The content of the chain-like ether is not particularly limited with respect to the total amount of the solvent; however, it is, for example, 5% by volume or more and 40% by volume or less, or 10% by volume or more and 30% by volume or less. In addition, the solvent may not include the chain-like ether.

The content of the other solvents is not particularly limited with respect to the total amount of the solvent; however, it is, for example, 1% by volume or more and 10% by volume or less. In addition, the solvent may not include the other solvents.

The electrolyte solution according to the present embodiment may include an additive. The additive is not particularly limited, and examples thereof include vinylene carbonate (VC), lithium difluorophosphate (LiPO₂F₂), and lithium bis(fluorosulfonyl)imide (LiFSI).

The content of the additive is not particularly limited with respect to the total amount of the solvent; however, it is, for example, 0.1% by mass or more and 5.0% by mass or less.

### 4. Positive electrode

As illustrated in Figure 1, the positive electrode 30 includes a positive electrode current collector 31 and a positive-electrode active material layer 32. In addition, the positive electrode 30 has a positive electrode end portion 35. The positive electrode end portion 35 extends in a length direction (y direction) along a direction parallel to a main surface of the positive electrode 30. The positive electrode 30 is electrically connected to an external circuit through the positive electrode end portion 35. When the secondary battery 1 includes a plurality of the positive electrodes 30, the respective positive electrode end portions 35 are electrically connected to each other. The respective positive electrode end portions 35 may be joined to each other by, for example, welding.

Figure 3 is a view for describing an example of the positive electrode 30. Figure 3 is a cross-sectional view taken along a line A-A' of Figure 1. In one embodiment, as illustrated in Figure 3, the positive electrode 30 includes the positive electrode current collector 31 and the positive-electrode active material layer 32 formed on both surfaces of the positive electrode current collector 31.

The positive electrode current collector 31 has a resin layer 311, a first metal layer 312a, and a second metal layer 312b. The first metal layer 312a and the second metal layer 312b are disposed to sandwich the resin layer 311. Hereinafter, the first metal layer 312a and the second metal layer 312b will also be collectively referred to as a "metal layer 312".

The resin layer 311 of the positive electrode current collector 31 may be formed of, for example, a sheet-shaped (film-shaped) or fibrous resin. The resin may be, for example, at least one of polyethylene terephthalate (PET), a polyolefin resin such as polyethylene or polypropylene, and a thermoplastic resin such as polystyrene, polyvinyl chloride, or polyamide. The resin layer 311 may be constituted by laminating at least one or more of the resins in a plurality of layers. In one embodiment, the resin layer 311 is formed of a material having a melting point of 150°C or higher and 300°C or lower. In one embodiment, the thickness of the resin layer 311 may be 3 µm or more and 10 µm or less, or may be 4 µm or more and 8 µm or less.

The resin layer 311 can function to melt in such a case where abnormal heat generation occurs in an overcharged state or a high-temperature state, to damage the positive electrode 30, and to interrupt a short-circuit current inside the battery. As a result, a rapid temperature rise inside the secondary battery 1 can be suppressed, and ignition of the battery can be suppressed. That is, the resin layer 311 can contribute to the improvement of the safety of the secondary battery 1.

The metal layer 312 of the positive electrode current collector 31 functions to be in physical and/or electrical contact with the positive-electrode active material layer 32 and to transfer and receive electrons to and from the positive-electrode active material layer 32. The metal layer 312 is formed of a conductor that does not react with lithium ions in the battery. In one embodiment, the metal layer 312 is formed of at least one material selected from the group consisting of aluminum, titanium, stainless steel, nickel, and alloys thereof. In one example, the metal layer 312 is aluminum or an aluminum alloy. In one embodiment, the metal layer 312 is formed by vapor deposition, sputtering, electroplating, or bonding the above-described material to the surfaces on both sides of the resin layer 311. In one embodiment, the thickness of each conductive layer 322 may be 0.5 µm or more and 5 µm or less, 0.7 µm or more and 3 µm or less, or 0.8 µm or more and 2.0 µm or less.

The positive-electrode active material layer 32 includes a first positive-electrode active material layer 32A provided on a surface of the positive electrode current collector 31 on the first metal layer 312a side, and a first positive-electrode active material layer 32B provided on a surface of the positive electrode current collector 31 on the second metal layer 312b side. It is noted that, in one embodiment, the positive-electrode active material layer 32 may be provided only on one surface of the positive electrode current collector 31. That is, the positive-electrode active material layer 32 may be provided only on the surface of the positive electrode current collector 31 on the first metal layer 312a side or the surface of the positive electrode current collector 31 on the second metal layer 312b side. The thickness of the positive-electrode active material layer 32 may be appropriately adjusted according to the desired capacity and rate characteristics of the battery. In one embodiment, the thickness of each positive-electrode active material layer 32 is, for example, 20 µm or more and 150 µm or less.

The positive-electrode active material layer 32 has a positive-electrode active material. The positive-electrode active material is a material for holding the carrier metal in the positive-electrode active material layer 32, and can also be referred to as a host material of the carrier metal. The positive-electrode active material may be a material for holding lithium ions in the positive-electrode active material layer 32, and in this case, the positive-electrode active material is filled with lithium ions, and lithium ions are desorbed from the positive-electrode active material by charging/discharging of the battery. As a result, the stability and output voltage of the battery can be improved.

In one embodiment, the positive-electrode active material is a metal oxide or a metal phosphate. The metal oxide may be, for example, a cobalt oxide-based compound, a manganese oxide-based compound, or a nickel oxide-based compound. The metal phosphate may be, for example, an iron phosphate-based compound or a cobalt phosphate-based compound. In one embodiment, the positive-electrode active material may be at least one selected from the group consisting of LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, LiMn₂O₄, LiFePO₄, LiCoPO₄, LiFeOF, LiNiOF, and LiTiS₂. One kind of positive-electrode active material may be used alone, or two or more kinds thereof may be used in combination. In one embodiment, the content of the positive-electrode active material in the positive-electrode active material layer 32 may be 50% by mass or more and 100% by mass or less with respect to the entire positive-electrode active material layer 32.

In one embodiment, the positive-electrode active material layer 32 may contain one or more components other than the positive-electrode active material.

In one embodiment, the positive-electrode active material layer 32 may contain a sacrificial positive electrode material. The sacrificial positive electrode material is a lithium-containing compound that causes an oxidation reaction in a charge/discharge potential range of the positive-electrode active material and substantially does not cause a reduction reaction.

In one embodiment, the positive-electrode active material layer 32 may contain a gel electrolyte. The gel electrolyte can improve the adhesive force between the positive-electrode active material layer 32 and the positive electrode current collector 31. In one example, the gel electrolyte contains a polymer, an organic solvent, and a lithium salt. The polymer in the gel electrolyte may be, for example, a copolymer of polyethylene and/or polyethylene oxide, polyvinylidene fluoride, a copolymer of polyvinylidene fluoride and hexafluoropropylene, or the like.

In one embodiment, the positive-electrode active material layer 32 may contain a conductive auxiliary agent and/or a binder. In one example, the conductive auxiliary agent is carbon black, single-wall carbon nanotube (SWCNT), multi-wall carbon nanotube (MWCNT), carbon nanofiber (CF), or the like. In one example, the binder is polyvinylidene fluoride, polytetrafluoroethylene, styrene-butadiene rubber, an acrylic resin, a polyimide resin, or the like. In one embodiment, the content of the conductive auxiliary agent is 0.5% by mass or more and 30% by mass or less with respect to the entire positive electrode 34. In one embodiment, the content of the binder may be 0.5% by mass or more and 30% by mass or less with respect to the entire positive electrode 34.

In one embodiment, the positive-electrode active material layer 32 may contain a polymer electrolyte. In one example, the polymer electrolyte is a solid polymer electrolyte mainly containing a polymer and an electrolyte, or a semi-solid polymer electrolyte mainly containing a polymer, an electrolyte, and a plasticizer. In one embodiment, a total of the content of the polymer electrolyte may be 0.5% by mass or more and 30% by mass or less with respect to the entire positive-electrode active material layer 32.

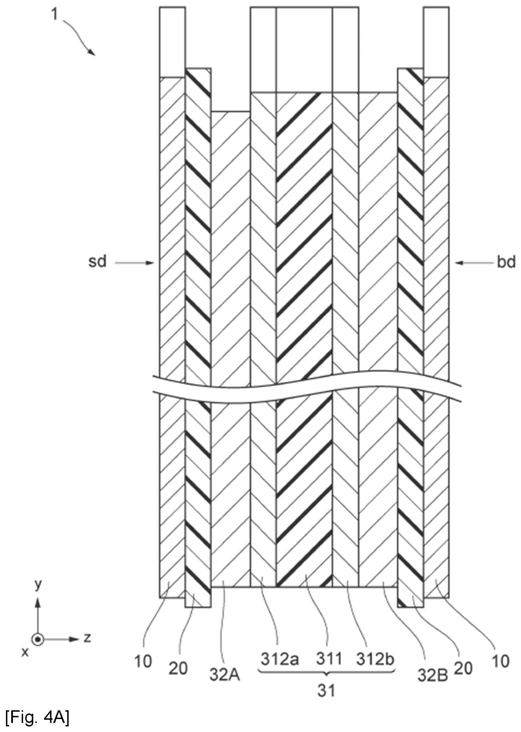

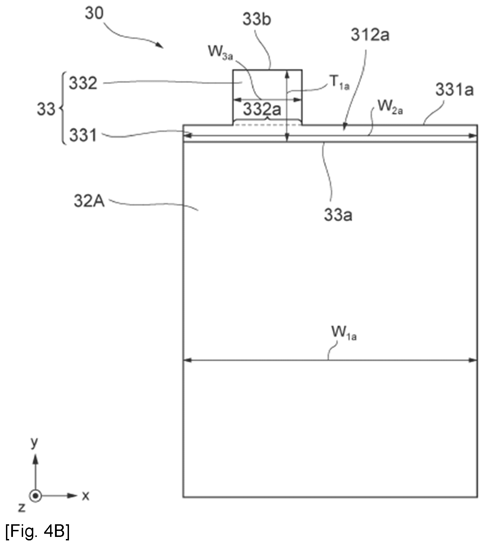

Figure 4A is a view for describing the first metal layer 312a. Figure 4A is a plan view of the positive electrode 30 as viewed from the direction of the arrow sd in Figure 1 and Figure 3 (the first metal layer 312a side). Figure 4B is a view for describing the second metal layer 312b. Figure 4B is a plan view of the positive electrode 30 as viewed from the direction of the arrow bd in Figure 1 and Figure 3 (the second metal layer 312b side).

As illustrated in Figure 4A, in one embodiment, the first metal layer 312a has a first portion 33 in which the positive-electrode active material layer is not provided. The first portion 33 includes one end 33a and the other end 33b in the length direction. The one end 33a constitutes a boundary with the positive-electrode active material layer 32A. A width dimension W₂ₐ of the one end 33a of the first portion 33 is larger than a width dimension W₃ₐ of the other end 33b. In one embodiment, the width dimension W₂ₐ of the one end 33a may be the same as the width dimension W₁ₐ of the positive-electrode active material layer 32A. It is noted that the positive-electrode active material layer 32A may have the same width dimension W₁ₐ over the length direction.

The first portion 33 is composed of a first region 331 and a second region 332. The first region 331 is a region adjacent to the positive-electrode active material layer 32A. The first region 331 is a region including the one end 33a of the first portion described above. The first region 331 includes one end 33a and the other end 331a in the longitudinal direction. In one embodiment, the other end 331a has the same width dimension W₂ₐ as the one end 33a. In one embodiment, the first region 331 may have a rectangular shape.

The second region 332 is a region adjacent to the first region 331. The second region 332 is a region including the other end 33b of the first portion described above. The second region 332 includes one end 332a and the other end 33b along the longitudinal direction. In one embodiment, the one end 332a may have the same width dimension W₃ₐ (< W₂ₐ) as the other end 33b. The one end 332a constitutes a part of the other end 331a of the first region 331. The second region 332 extends from a part of the other end 331a of the first region 331 in the length direction. In one embodiment, the second region 332 may have a rectangular shape. In one embodiment, the second region 332 may have various shapes (for example, a triangular shape, a trapezoidal shape, and the like) instead of a rectangular shape.

As illustrated in Figure 4B, in one embodiment, the second metal layer 312b has a second portion 34 in which the positive-electrode active material layer is not provided. The second portion 34 includes one end 34a and the other end 34b in the length direction. The one end 34a constitutes a boundary with the positive-electrode active material layer 32B. The one end 34a of the second portion 34 may have the same width dimension W_{2b} as the other end 34b. In one embodiment, the width dimension W_{2b} of the one end 34a is smaller than the width dimension W_{1b} of the positive-electrode active material layer 32B. It is noted that the positive-electrode active material layer 32B may have the same width dimension W_{1b} over the length direction. In one embodiment, the second portion 34 may have a rectangular shape. In one embodiment, the second portion 34 may have various shapes (for example, a triangular shape, a trapezoidal shape, and the like) instead of a rectangular shape.

As illustrated in Figure 4A and Figure 4B, in one embodiment, the second region 332 and the second portion 34 may have the same shape. In addition, in one embodiment, the second region 332 and the second portion 34 may have different shapes.

As illustrated in Figure 4A and Figure 4B, in one embodiment, the first portion 33 and the second portion 34 have different width dimensions and different length dimensions. In one embodiment, the width dimension W₂ₐ of the one end 33a of the first portion 33 is larger than the width dimension W_{2b} of the one end 34a of the second portion. In one embodiment, the width dimension W₃ₐ of the other end 33b of the first portion is the same as the width dimension W_{2b} of the other end 34b of the second portion. In one embodiment, a length dimension T₁ₐ (a distance from the one end 33a to the other end 33b) of the first portion is larger than a length dimension T_{1b} (a distance from the one end 34a to the other end 34b) of the second portion 34. In one embodiment, the width dimension W₁ₐ of the positive-electrode active material layer 32A and the width dimension W_{1b} of the positive-electrode active material layer 32B are the same.

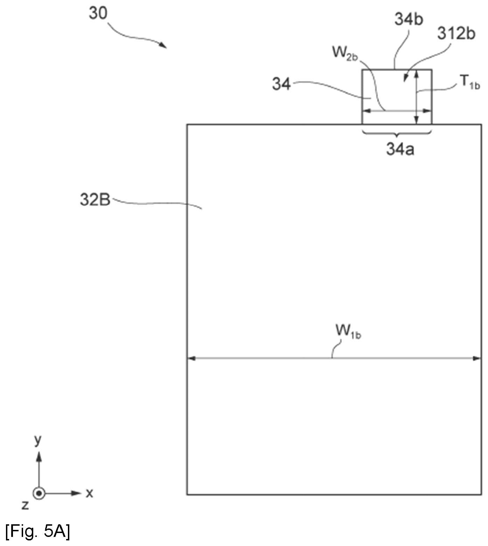

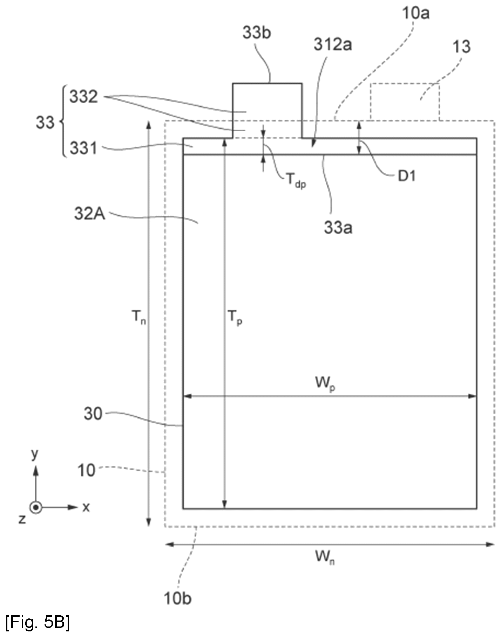

Figure 5A and Figure 5B are views for describing a disposition example of a positive electrode and a negative electrode. Figure 5A illustrates a positional relationship between the negative electrode 10 and the positive electrode 30 when viewed from the direction of the arrow sd (the surface on the first metal layer 312a side) in Figure 1 and Figure 3. Figure 5B illustrates a positional relationship between the negative electrode 10 and the positive electrode 30 when viewed from the direction of the arrow bd (the surface on the second metal layer 312b side) in Figure 1 and Figure 3. In Figure 5A and Figure 5B, the negative electrode 10 is indicated by a broken line, and the positive electrode 30 is indicated by a solid line.

As illustrated in Figure 5A and Figure 5B, the negative electrode 10 includes one end 10a and the other end 10b in the length direction (y direction). When the negative electrode 10 includes the negative-electrode active material layer 12 (see Figure 2A and Figure 2D), the negative-electrode active material layer 12 is provided between the one end 10a and the other end 10b. In one embodiment, the negative electrode 10 has a constant width dimension Wₙ from the one end 10a to the other end 10b. The negative electrode end portion 13 extends from the one end 10a in the length direction. The width dimension of the negative electrode end portion 13 may be smaller than the width dimension Wₙ.

As illustrated in Figure 5A, the first region 331 of the first portion 33 entirely overlaps with the negative electrode 10 in a plan view. The second region 332 of the first portion 33 partially overlaps with the negative electrode 10 and partially does not overlap with the negative electrode 10 in a plan view. In one embodiment, one end 33a of the first portion 33 overlaps with the negative electrode 10 in a plan view, and the other end 33b of the first portion does not overlap with the negative electrode 10 in the plan view. In one embodiment, the one end 10a of the negative electrode 10 is disposed between the one end 33a of the first portion 33 and the other end 33b of the first portion 33 in a plan view.

As illustrated in Figure 5B, in one embodiment, the second portion 34 partially overlaps with the negative electrode 10 and partially does not overlap with the negative electrode 10 in a plan view. In one embodiment, one end 34a of the second portion 34 overlaps with the negative electrode 10 in a plan view, and the other end 34b does not overlap with the negative electrode 10 in the plan view. In one embodiment, the one end 10a of the negative electrode 10 is disposed between the one end 34a and the other end 34b of the second portion 34 in a plan view.

As illustrated in Figure 5A and Figure 5B, the negative electrode 10 is disposed to cover the positive-electrode active material layers 32A and 32B of the positive electrode 30 in a plan view. This is because, when the negative electrode 10 is not provided at a position facing the positive-electrode active material layers 32A and 32B with the separator 20 being interposed therebetween, metallic lithium may be deposited at the position during charging, and the battery performance may deteriorate. In one embodiment, the negative electrode 10 and the positive electrode 30 are disposed so that a distance from the one end 10a of the negative electrode 10 to the positive-electrode active material layer 32 in a plan view is equal to or more than a predetermined distance (hereinafter, also referred to as a "minimum separation distance").

In one embodiment, a distance D1 in a plan view from the one end 33a of the first portion 33 to the one end 10a of the negative electrode 10 may be 3 mm or less, 0.25 mm or more and 3 mm or less, 0.5 mm or more and 2.75 mm or less, or 0.75 mm or more and 2.5 mm or less.

In one embodiment, a distance D2 in a plan view from the one end 34a of the second portion 34 to the one end 10a of the negative electrode 10 may be 0.25 mm or more, 0.25 mm or more and 2 mm or less, 0.5 mm or more and 1.75 mm or less, or 0.75 mm or more and 1.5 mm or less. The distance D2 is the minimum separation distance.

In one embodiment, the distance D1 in a plan view from the one end 33a of the first portion 33 to the one end 10a of the negative electrode 10 is longer than the distance D2 in a plan view from the one end 34a of the second portion 34 to the one end 10a of the negative electrode 10. A difference between the distance D1 and the distance D2 may be 0.25 mm or more and 2.5 mm or less, 0.5 mm or more and 2 mm or less, or 0.75 mm or more and 1.75 mm or less.

By the way, there is a possibility that the negative electrode 10 and the positive electrode current collector 31 are short-circuited due to the damage or the like of the separator 20. However, in the secondary battery 1, as described above, the first metal layer 312a and the second metal layer 312b are configured to sandwich the resin layer 311 in the positive electrode current collector 31 (see Figure 3). Therefore, even when such a short circuit occurs, the resin layer 311 of the positive electrode current collector 31 is melted, and abnormal heat generation or ignition can be prevented in the secondary battery 1. It is noted that, in one embodiment, an insulating member may be further provided at a position facing the negative electrode 10 among the positions of the positive electrode current collector 31, where the metal surface is exposed. The insulating member can suppress the above-described short circuit due to the damage or the like of the separator 20.

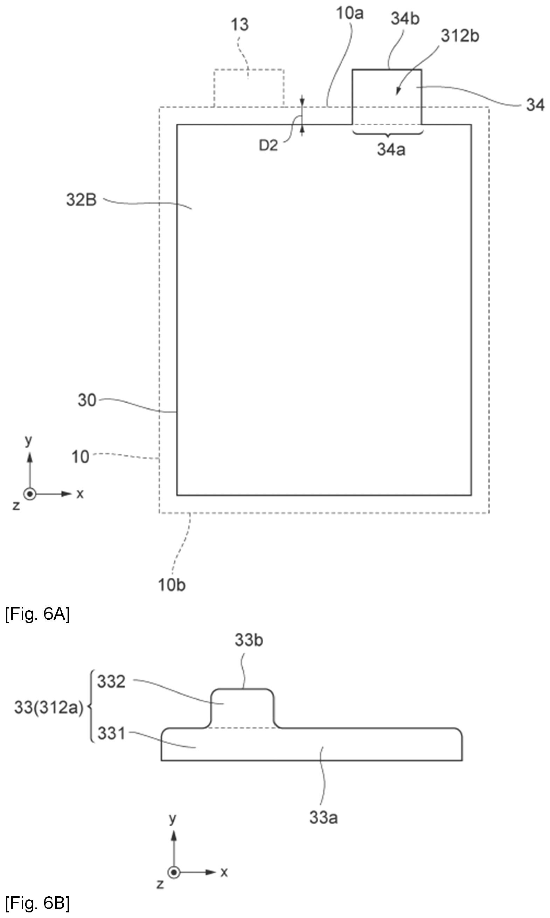

Figure 6A and Figure 6B are each a view illustrating another example of the first portion 33. In one embodiment, a part or all of an outer edge of the first portion 33 may be configured to have a curved surface. For example, as illustrated in Figure 6A, the first region 331 and the second region 332 may have a rectangular shape with rounded corners (in the present disclosure, the "rectangular shape" may include an aspect in which a part of an outer edge such as a corner is configured to have a curved surface). In addition, in one embodiment, each of the first region 331 and the second region 332 of the first portion 33 may have a shape other than the rectangular shape. For example, as illustrated in Figure 6B, the first region 331 may have a rectangular shape, and the second region 332 may have a trapezoidal shape. In addition, for example, the first region 331 may have a rectangular shape or a trapezoidal shape, and the second region 332 may have a triangular shape or a trapezoidal shape.

### <Method for manufacturing secondary battery>

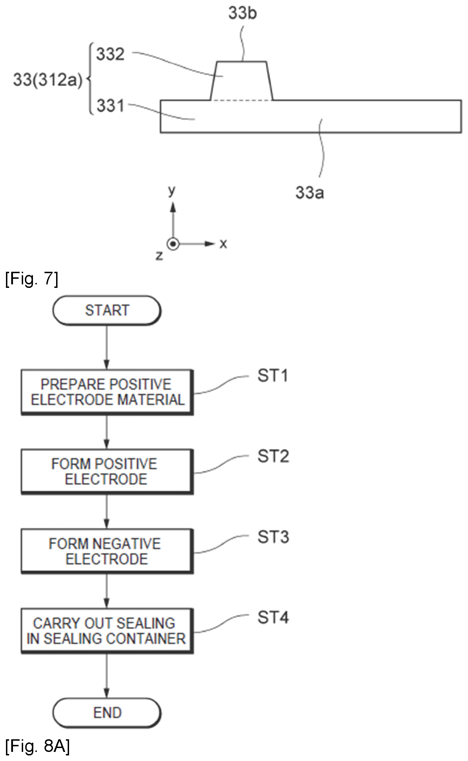

Figure 7 is a flowchart illustrating an example of a method for manufacturing the secondary battery 1. The method includes a step ST1 of preparing a positive electrode material, a step ST2 of forming the positive electrode 30, a step ST3 of forming the negative electrode 10, and a step ST4 of sealing the positive electrode 30, the negative electrode 10, the separator 20, and, as necessary, the electrolyte solution in a sealing container.

### 1. Step of preparing positive electrode material

In the step ST1, the positive electrode material is prepared. First, the positive electrode current collector 31 is prepared. The positive electrode current collector 31 is configured to sandwich the resin layer 311 between the first metal layer 312a and the second metal layer 312b.

As the positive electrode current collector 31, a commercially available product may be used, or the positive electrode current collector 31 may be produced from various materials. When producing the positive electrode current collector 31, in one embodiment, a metal is subjected to vapor deposition, sputtering, electroplating, or bonding to the surfaces on both sides of the resin layer 311. As a result, the positive electrode current collector 31 in which the metal layer 312a and the metal layer 312b are formed on the resin layer 311 is obtained.

Next, the positive-electrode active material layer 32 is formed on the positive electrode current collector 31. For example, a positive-electrode active material composition is obtained by mixing the positive-electrode active material and one or more components other than the positive-electrode active material. The positive-electrode active material composition is applied onto both surfaces of the positive electrode current collector 31. The positive electrode current collector 31 onto which the positive-electrode active material composition is applied is subjected to press molding to form the positive-electrode active material layers 32A and 32B on both surfaces of the positive electrode current collector 31. As described above, the positive electrode material is formed.

### 2. Step of forming positive electrode

Next, in the step ST2, the positive electrode material is cut out to form the positive electrode 30.

A method of cutting out the positive electrode material is not particularly limited, and the positive electrode material may be cut out with scissors, a cutter, or the like, or may be cut out using a mold prepared in advance.

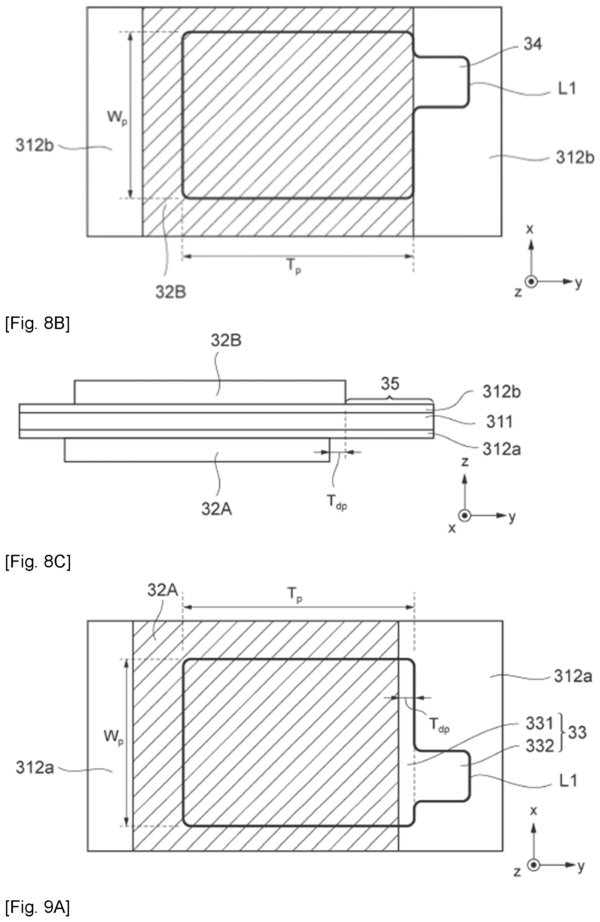

Figure 8A to Figure 8C are views for describing a step of forming the positive electrode of the secondary battery 1. Figure 8A illustrates an example of a plan view of one surface of the positive electrode material. Figure 8B illustrates an example of a cross-sectional view of the positive electrode material. Figure 8C illustrates an example of a plan view of the other surface of the positive electrode material.

When the positive-electrode active material layer 32 is formed on both surfaces of the positive electrode current collector 31, a deviation of the formation surface in the length direction may occur due to, for example, the accuracy of the coating device or the like. In the example illustrated in Figure 8B, the positive-electrode active material layer 32B on the second metal layer 312b is formed to be deviated by T_{dp} toward the side on which the positive electrode end portion 35 is formed, as compared with the positive-electrode active material layer 32A on the first metal layer 312a. In such a case, in the step ST2, the positive electrode material is cut out by the cutting line L1 illustrated in Figure 8A and Figure 8C. The cutting line L1 is set in accordance with the coating region of the positive-electrode active material layer 32B illustrated in Figure 8A. As a result, the first portion 33 composed of the first region 331 and the second region 332 is formed on the first metal layer 312a (Figure 8C). In addition, the second portion 34 is formed on the second metal layer 312b.

### 3. Step of forming negative electrode

Next, in the step ST3, the negative electrode 10 is formed. The negative electrode 10 may be in any of the aspects illustrated in Figure 2A to Figure 2D. It is noted that, as the negative electrode current collector 11, a commercially available product may be used, or the negative electrode current collector 11 may be produced from various materials. When producing the negative electrode current collector 11, the negative electrode current collector 11 may be produced in the same manner as the positive electrode current collector 31.

When the negative electrode 10 has the negative-electrode active material layer 12, the negative-electrode active material layer 12 is formed on the negative electrode current collector 11 as follows.

For example, a negative-electrode active material and one or more components other than the negative-electrode active material are mixed to obtain a negative-electrode active material composition. The negative-electrode active material composition is applied onto both surfaces of the negative electrode current collector 11. The negative electrode current collector 11 onto which the negative-electrode active material composition is applied is subjected to press molding to form the negative-electrode active material layer 12 on both surfaces of the negative electrode current collector 11. As described above, the negative electrode material is formed. The negative electrode material is cut out to form the negative electrode 10. A method of cutting out the negative electrode material is not particularly limited, and the negative electrode material may be cut out with scissors, a cutter, or the like, or may be cut out using a mold prepared in advance.

### 4. Step of carrying out sealing in sealing container

Next, the separator 20 is prepared. The separator 20 may be obtained by punching out an object made from the material described above into a predetermined shape.

Then, the negative electrode 10, the separator 20, and the positive electrode 30 are disposed in one or a plurality of sets so that the negative electrode 10 formed in the step ST3 and the positive electrode 30 formed in the step ST2 face each other with the separator 20 being interposed between the negative electrode 10 and the positive electrode 30, thereby forming a laminate, and the laminate is sealed in a sealing container. In this case, the electrolyte solution may be sealed in the sealing container. In addition, the laminate may be fixed by welding or the like so that the positions of the respective configurations do not deviate from each other in the sealing container.

In the present embodiment, the positive electrode material is cut out along a cutting line L1. This is due to the following reason.

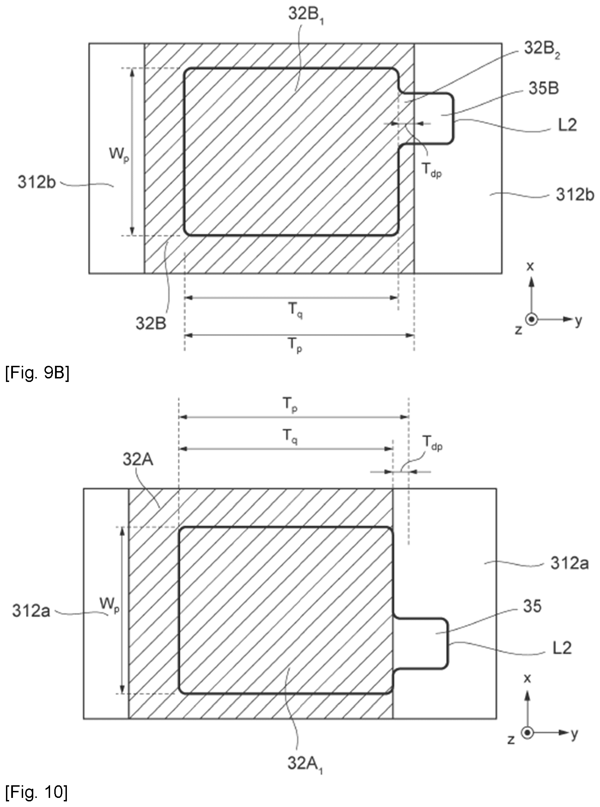

Figure 9A and Figure 9B are views for describing another example of the cutting out of the positive electrode material. Figure 9A and Figure 9B are examples of a case where the positive electrode material is cut out along a cutting line L2 when the deviation of the coating surface illustrated in Figure 8B occurs. The cutting line L2 is set in accordance with the coating region of the positive-electrode active material layer 32A illustrated in Figure 9B. As a result, as illustrated in Figure 9A, the positive-electrode active material layer 32B on the second metal layer 312b after being cut out along the cutting line L2 includes a rectangular region 32B₁ having a width Wₚ and a length T_{q}, and a rectangular region 32B₂ having the same width as the positive electrode end portion 35B and a length T_{dp}. The positive-electrode active material layer 32A on the first metal layer 312a after being cut out along the cutting line L2 includes the rectangular region 32A₁ having the width Wₚ and the length T_{q}. The length of the positive electrode end portion 35B of the second metal layer 312b is shorter than the length of the positive electrode end portion 35 of the first metal layer 312a by T_{dp}.

Figure 10 is a view for describing an example of the effect of adopting the cutting line L1. Each of Figure 10(A) and Figure 10(B) illustrates a positional relationship between the positive electrode 30 and the negative electrode 10 as viewed from one surface and the other surface when the positive electrode 30 cut out along the cutting line L2 is used. Each of Figure 10(C) and Figure 10(D) illustrates a positional relationship between the positive electrode 30 and the negative electrode 10 as viewed from the surface on the first metal layer 312a side and the surface on the second metal layer 312b side when the positive electrode 30 cut out along the cutting line L1 is used.

As described above, the negative electrode 10 and the positive electrode 30 are disposed so that the distance in a plan view from the one end 10a of the negative electrode 10 to the positive-electrode active material layer 32 (32A or 32B) is equal to or more than the minimum separation distance (in the example illustrated in Figure 10, the minimum separation distance is D2). As a result, the total area of the positive-electrode active material layers 32A and 32B is different between a case where the positive electrode 30 is created along the cutting line L2 and a case where the positive electrode 30 is created along the cutting line L1. Specifically, as illustrated in Figure 10, the area (the product of the length Tₚ and the width Wₚ) of the positive-electrode active material layer 32B (Figure 10(D)) along the cutting line L1 is larger than the area (the sum of the area of the region 32B₁ and the area of the region 32B₂) of the positive-electrode active material layer 32B (Figure 10(A)) along the cutting line L2. In addition, the area (the product of the length T_{q} and the width Wₚ) of the positive-electrode active material layer 32A (Figure 10(C)) along the cutting line L1 is the same as the area (the product of the length T_{q} and the width Wₚ) of the positive-electrode active material layer 32A (Figure 10(B)) along the cutting line L2. As a result, the total area of the positive-electrode active material layers 32A and 32B can be increased by cutting out the positive electrode material along the cutting line L1 (Figure 8A and Figure 8C) rather than by cutting it out along the cutting line L2 (Figure 9A and Figure 9B). As a result, the cell capacity of the secondary battery 1 can be increased.

### <Method of using secondary battery>

The secondary battery 1 is charged/discharged by connecting the positive electrode 30 to one end of an external circuit and connecting the negative electrode 10 to the other end of the external circuit. The external circuit may be, for example, a resistor, a power supply, an apparatus, a device, another battery, or a potentiostat.

When a voltage is applied between the positive electrode 30 and the negative electrode 10 so that a current flows from the negative electrode 10 to the positive electrode 30 through the external circuit, the secondary battery 1 is charged, and the lithium metal is deposited on the surface of the negative electrode 10. When the positive electrode 30 and the negative electrode 10 are connected to each other through a desired external circuit in the charged secondary battery 1, the secondary battery 1 is discharged, and the deposition of the lithium metal which is generated on the surface of the negative electrode 10 is followed by electrolytical dissolution.

In one embodiment, in the secondary battery 1, a solid electrolyte interface layer (SEI layer) may be formed on the surface of the negative electrode 10 or on the surface of the separator 20 (that is, at the interface between the negative electrode 10 and the separator 20) by the first charging (initial charging) after the assembly of the battery. The SEI layer may contain, for example, an inorganic compound containing lithium, an organic compound containing lithium, or the like. In one embodiment, the thickness of the SEI layer is 1.0 nm or more and 10 µm or less. When the SEI layer is formed in the secondary battery 1, the lithium metal is deposited or dissolved at the interface between the negative electrode 10 and/or the separator 20 and the SEI layer by charging/discharging.

The secondary battery 1 described above can have high safety and favorable cell capacity.

### Examples

The present invention will be described in detail by using Examples and Comparative Examples. The present disclosure is not limited to the following Examples and Comparative Examples. In addition, unless otherwise specified, the operation was carried out at room temperature (25°C) and 1 atm in the following Examples.

### 1. Production of lithium secondary battery

As Example 1, a secondary battery 1 having the structure illustrated in Figure 1 was produced using the method illustrated in Figure 7. First, a negative electrode 10 was prepared. Specifically, first, a Cu foil having a thickness of 8 µm was prepared as a negative electrode current collector 11. Next, a mixed material was prepared by mixing 97 parts by mass of graphite as a negative-electrode active material, 0.5 parts by mass of carbon black as a conductive auxiliary agent, and 1.5 parts by mass of carboxymethyl cellulose (CMC) and 1.0 parts by mass of styrene-butadiene rubber (SBR) as a binder in water as a solvent. This mixed material was applied onto both surfaces or one surface of the negative electrode current collector 11 so that the weight per unit area was individually 15 mg/cm², and pressed to form a negative-electrode active material layer 12. Thereafter, the negative electrode current collector 11 on which the negative-electrode active material layer 12 was formed was cut out to a predetermined size (Tₙ x Wₙ in Figure 10(C) and Figure 10(D) was 42 mm x 42 mm).

Next, as a separator 20, a sheet (thickness in the lamination direction: 15 µm, size in the width direction and the length direction: 45 mm x 45 mm) having a surface coated with a mixture of polyvinylidene fluoride (PVDF) and Al₂O₃ was prepared.

Next, a positive electrode 30 was prepared. Specifically, first, as a positive electrode current collector 31, a film-shaped polyethylene terephthalate (PET) having a thickness of 6 µm, on both surfaces of which Al was subjected to vapor deposition to a thickness of 1.0 µm, was prepared. Next, a mixed material was prepared by mixing 96 parts by mass of LiNi_{0.8}Co_{0.15}Al_{0.05}O₂ as a positive-electrode active material, 2 parts by mass of carbon black as a conductive auxiliary agent, and 2 parts by mass of polyvinylidene fluoride (PVDF) as a binder in N-methyl-pyrrolidone (NMP) as a solvent. Then, this mixed material was applied onto both surfaces of the positive electrode current collector so that the weight per unit area was 23 mg/cm², and pressed to form a positive-electrode active material layer 32. Thereafter, the positive electrode current collector 31 on which the positive-electrode active material layer 32 was formed was cut out so that Tₚ was 40 mm, T_{q} was 39 mm, Wₚ was 40 mm, and T_{dp} was 1 mm in a case of the cutting line L1 in Figure 10 (Figure 10(C) and Figure 10(D)).

Next, the separator 20, the positive electrode 30, and the negative electrode 10 were disposed so that the positive electrode 30 and the negative electrode 10 faced each other with the separator 20 being interposed therebetween, thereby forming a laminate. In this laminate, the positive electrode 30 was laminated 10 times, and both ends of the laminate in the lamination direction were the negative electrodes 10. The negative electrodes 10 at both ends had the negative-electrode active material layer 12 only on the surface on the side facing the positive electrode 30 with the separator 20 being interposed therebetween, and the negative electrodes 10 other than both ends had the negative-electrode active material layer 12 on both surfaces. In addition, the positive electrode 30 and the negative electrode 10 were disposed so that D1 was 2 mm and D2 was 1 mm in Figure 10(C) and Figure 10(D). Then, this laminate was inserted into a laminate exterior body and sealed together with an electrolyte solution to obtain a lithium secondary battery. As the electrolyte solution, 2 parts by mass of vinylene carbonate (VC) was added to an electrolyte solution obtained by dissolving lithium hexafluorophosphate (LiPF₆) in a solvent obtained by mixing ethylene carbonate (EC), dimethyl carbonate (DMC), and ethyl methyl carbonate (EMC) at a ratio of 30:35:35 parts by mass so that the concentration of LiPF₆ was 1 M.

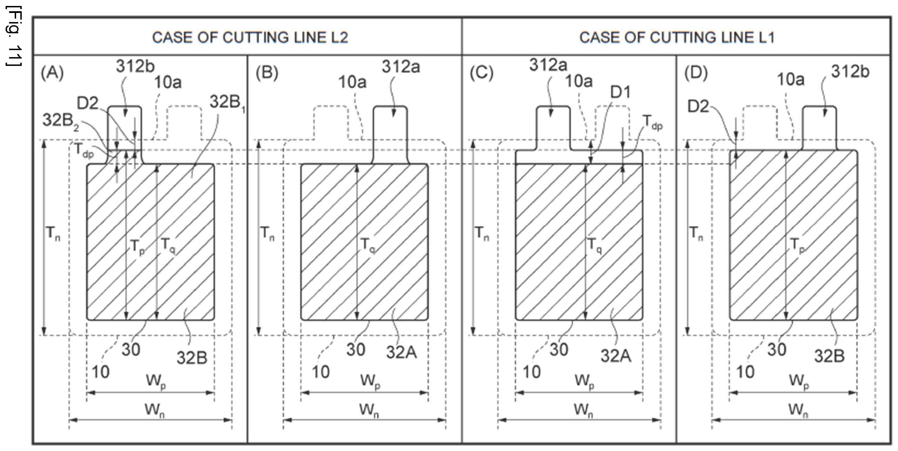

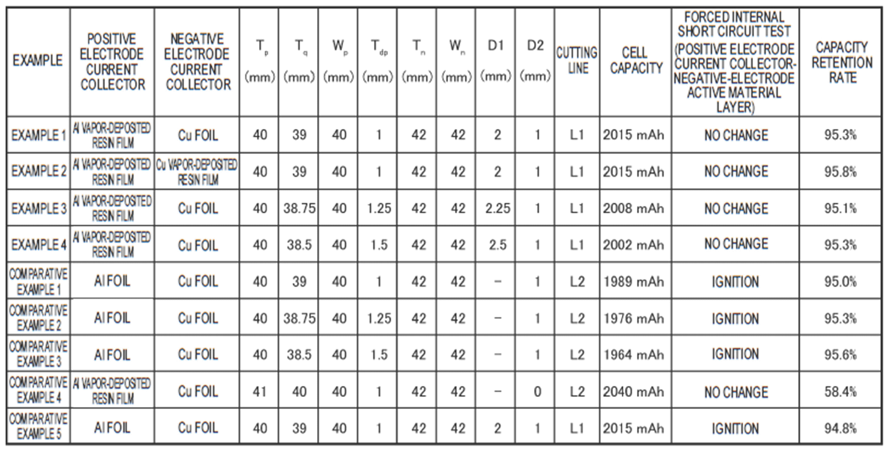

Secondary batteries 1 of Examples 2 to 4 were produced in the same manner as in Example 1, except that the type of the positive electrode current collector, the type of the negative electrode current collector, and the shape of the positive electrode were changed based on Figure 10 and Figure 11.

Lithium secondary batteries of Comparative Examples 1 to 5 were produced in the same manner as in Example 1, except that the type of the positive electrode current collector, the type of the negative electrode current collector, and the shape of the positive electrode were changed based on Figure 10 and Figure 11.

It is noted that, in Figure 11, the Cu vapor-deposited resin film was obtained by subjecting Cu to vapor deposition on both surfaces of a film-shaped polyethylene terephthalate (PET) having a thickness of 6 µm to a thickness of 1.0 µm. In addition, the Al foil is an Al foil having a thickness of 8 µm.

### 2. Evaluation

### 2.1. Forced internal short circuit test

The lithium secondary battery of each of Examples and Comparative Examples was subjected to CC charging at a current of 0.1 C until the voltage reached 4.2 V in an environment of a temperature of 25°C, and then subjected to CC discharging at a current of 0.1 C until the voltage reached 3.0 V. Next, the lithium secondary battery of each of Examples and Comparative Examples was subjected to CC charging at a current of 0.1 C until the voltage reached 4.2 V in an environment of a temperature of 25°C. It is noted that the CC charging is charging carried out at a constant current value, and the CC discharging is discharging carried out at a constant current value. In addition, the current of 1 C is a current capable of completely charging a battery in 1 hour, which is calculated based on the theoretical capacity of the battery. The current of 2 C is twice the magnitude of the current of 1 C.

Next, the charged lithium secondary battery of each of Examples and Comparative Examples was subjected to a forced internal short circuit test in accordance with the method of the forced internal short circuit test described in JISC8714: 2007, and the evaluation results thereof are illustrated in Figure 10. As a result of carrying out the forced internal short circuit test, an example in which there was no change is described as "no change", and an example in which ignition occurred is described as "ignition".

### 2.2. Cell capacity and capacity retention rate

The lithium secondary battery of each of Examples and Comparative Examples was subjected to CC charging at a current of 0.1 C until the voltage reached 4.2 V in an environment of a temperature of 25°C, and then subjected to CC discharging at a current of 0.1 C until the voltage reached 3.0 V. Next, in an environment of a temperature of 25°C, a cycle of subjecting the lithium secondary battery of each of Examples and Comparative Examples to CC charging at a current of 0.3 C until the voltage reached 4.2 V and then subjecting the lithium secondary battery to CC discharging at a current of 0.3 C until the voltage reached 3.0 V was carried out while applying an external pressure of 50 kPa (first cycle). This cycle was carried out for 100 cycles. The capacity (Ah) obtained from the 100th cycle was divided by the capacity (Ah) obtained from the first cycle to obtain the capacity retention rate (%) of the 100th cycle. The capacity obtained from the first cycle is described in the column of the cell capacity in Figure 10, and the capacity retention rate of the 100th cycle is described in the column of the capacity retention rate.

### 3. Evaluation result

Figure 10 is a view illustrating the configurations and results of Examples and Comparative Examples. It was found that the lithium secondary batteries of Examples did not cause ignition, had a large cell capacity, and had a high capacity retention rate. On the other hand, it was found that although the lithium secondary batteries of Comparative Examples 1 to 3 had a high capacity retention rate, they caused ignition and had a small cell capacity. In addition, it was found that although the lithium secondary battery of Comparative Example 4 did not cause ignition and had a large cell capacity, it had a low capacity retention rate. In addition, it was found that although the lithium secondary battery of Comparative Example 5 had a large cell capacity and a high capacity retention rate, it caused ignition. That is, it was found that the lithium secondary batteries of Examples 1 to 4 had favorable cycle characteristics in addition to high safety and favorable cell capacity.

It was found that although the lithium secondary batteries of Comparative Examples 1 to 3 had favorable cycle characteristics, they had low safety and a relatively small cell capacity. The factor of low safety is not particularly limited; however, it is considered as follows. It is presumed that, since the positive electrode current collector consisting of only the metal layer was used instead of the positive electrode current collector configured to sandwich the resin layer with the metal layers, abnormal heat generation occurred when the positive electrode and the negative electrode were short-circuited. In addition, the factor of low cell capacity is not particularly limited; however, it is considered to be due to a small surface area of the positive-electrode active material layer.

It was found that although the lithium secondary battery of Comparative Example 4 had high safety and favorable cell capacity, it had low cycle characteristics. The factor is not particularly limited; however, it is considered as follows. In the plan view of the lithium secondary battery of Comparative Example 4, since the distance D2 between the positive-electrode active material layer and the negative-electrode active material layer on one surface is 0 mm, it is presumed that a minute short circuit has occurred between the positive-electrode active material layer and the negative-electrode active material layer during the cycle evaluation.

It was found that although the lithium secondary battery of Comparative Example 5 had favorable cell capacity and favorable cycle characteristics, it had low safety. The factor is not particularly limited; however, it is considered as follows. It is presumed that, since the positive electrode current collector consisting of only the metal layer was used instead of the positive electrode current collector configured to sandwich the resin layer with the metal layers, abnormal heat generation occurred when the positive electrode current collector and the negative-electrode active material layer were short-circuited.

The embodiment according to the present disclosure further includes the following aspects.

### (Appendix 1)

A lithium secondary battery including:
a positive electrode and a negative electrode which face each other with a separator being interposed between the positive electrode and the negative electrode,
in which the positive electrode includes a positive electrode current collector configured to sandwich a resin layer between a first metal layer and a second metal layer, and a positive-electrode active material layer provided on the positive electrode current collector,
the first metal layer includes a first portion in which the positive-electrode active material layer is not provided,
the second metal layer includes a second portion in which the positive-electrode active material layer is not provided, and
the first portion and the second portion have different dimensions in both a width direction and a length direction.

### (Appendix 2)

The lithium secondary battery according to Appendix 1,
in which the first portion includes one end and the other end in the length direction, the one end of the first portion overlaps with the negative electrode in a plan view, and the other end of the first portion does not overlap with the negative electrode in the plan view, and
the second portion includes one end and the other end in the length direction, the one end of the second portion overlaps with the negative electrode in a plan view, and the other end of the second portion does not overlap with the negative electrode in the plan view.

### (Appendix 3)

The lithium secondary battery according to Appendix 1 or Appendix 2, in which the one end of the first portion and the one end of the second portion have different width dimensions.

### (Appendix 4)

The lithium secondary battery according to any one of Appendix 1 to Appendix 3, in which the other end of the first portion and the other end of the second portion have the same width dimension.

### (Appendix 5)

The lithium secondary battery according to any one of Appendix 1 to Appendix 4, in which the one end of the first portion has the same width dimension as a portion of the first metal layer in which the positive-electrode active material layer is provided.

### (Appendix 6)

The lithium secondary battery according to any one of Appendix 1 to Appendix 5, in which the one end of the second portion has a smaller width dimension than a portion of the second metal layer in which the positive-electrode active material layer is provided.

### (Appendix 7)

The lithium secondary battery according to any one of Appendix 1 to Appendix 6, in which the first portion includes a first rectangular region having a first width dimension and a second rectangular region having a second width dimension smaller than the first width dimension.

### (Appendix 8)

The lithium secondary battery according to any one of Appendix 1 to Appendix 7, in which the first width dimension is the same as a width dimension of a portion of the first metal layer in which the positive-electrode active material layer is provided.

### (Appendix 9)

The lithium secondary battery according to any one of Appendix 1 to Appendix 8, in which the second portion includes a rectangular region having the same shape as the second rectangular region.

### (Appendix 10)

The lithium secondary battery according to any one of Appendix 1 to Appendix 9,
in which the first portion includes one end and the other end in the length direction,
the second portion includes one end and the other end in the length direction,
the negative electrode includes one end and the other end in the length direction, and
the one end of the negative electrode is disposed between the one end of the first portion and the other end of the first portion in a plan view, and disposed between the one end of the second portion and the other end of the second portion in the plan view.

### (Appendix 11)

The lithium secondary battery according to any one of Appendix 1 to Appendix 10, in which a distance in the plan view from the one end of the first portion to the one end of the negative electrode is longer than a distance in the plan view from the one end of the second portion to the one end of the negative electrode.

### (Appendix 12)

The lithium secondary battery according to any one of Appendix 1 to Appendix 11, in which the distance in the plan view from the one end of the first portion to the one end of the negative electrode is 3 mm or less.

### (Appendix 13)

The lithium secondary battery according to any one of Appendix 1 to Appendix 12, in which the distance in the plan view from the one end of the second portion to the one end of the negative electrode is 0.25 mm or more.

### (Appendix 14)

A lithium secondary battery including:
a positive electrode and a negative electrode which face each other with a separator being interposed between the positive electrode and the negative electrode,
in which the positive electrode includes a positive electrode current collector configured to sandwich a resin layer between a first metal layer and a second metal layer, and a positive-electrode active material layer provided on the positive electrode current collector, and
the first metal layer includes a first portion in which the positive-electrode active material layer is not provided, the first portion includes a first region and a second region, the first region has one end and the other end in a length direction and has a first width dimension, and the second region extends in the length direction from a part of the other end of the first region and has a second width dimension smaller than the first width dimension.

### (Appendix 15)

The lithium secondary battery according to Appendix 14, in which the first region entirely overlaps with the negative electrode in a plan view, and the second region partially overlaps with the negative electrode and partially does not overlap with the negative electrode in the plan view.

### (Appendix 16)

The lithium secondary battery according to Appendix 14 or Appendix 15, in which the second metal layer includes a second portion in which the positive-electrode active material layer is not provided, and the second portion includes a region having the same shape as the second region.

### (Appendix 17)

The lithium secondary battery according to any one of Appendix 1 to Appendix 16, in which the negative electrode includes a negative electrode current collector and a negative-electrode active material layer provided on the negative electrode current collector.

### (Appendix 18)

The lithium secondary battery according to any one of Appendix 1 to Appendix 17, in which the negative electrode includes a negative electrode current collector configured to sandwich a resin layer between a pair of metal layers.

### (Appendix 19)

The lithium secondary battery according to any one of Appendix 1 to Appendix 18, in which a laminate in which a plurality of sets of the positive electrode, the separator, and the negative electrode is laminated is provided.

### (Appendix 20)

A method for manufacturing a lithium secondary battery, the method including:
preparing a positive electrode material, in which the positive electrode material includes a positive electrode current collector configured to sandwich a resin layer between a first metal layer and a second metal layer, and a positive-electrode active material layer provided on the positive electrode current collector; and
cutting out the positive electrode material to form a positive electrode, in which in the positive electrode, the first metal layer includes a first portion in which the positive-electrode active material layer is not provided, the second metal layer includes a second portion in which the positive-electrode active material layer is not provided, and the first portion and the second portion have different dimensions in both a width direction and a length direction.

Each of the above-described embodiments is described for the purpose of description, and is not intended to limit the scope of the present disclosure. Each of the above-described embodiments can be modified in various ways without departing from the scope and spirit of the present disclosure. For example, a part of constitutional elements in a certain embodiment can be added to another embodiment. In addition, a part of constitutional elements in an embodiment can be replaced with corresponding constitutional elements in another embodiment.

### Reference Signs List

1: secondary battery
10: negative electrode
10a: one end of negative electrode
10b: other end of negative electrode
11: negative electrode current collector
111: negative electrode resin layer
112: negative electrode metal layer
12: negative-electrode active material layer
13: negative electrode end portion
20: separator
30: positive electrode
31: positive electrode current collector
311: resin layer
312a: first metal layer
312b: second metal layer
32: positive-electrode active material layer
33: first portion
33a: one end of first portion
33b: other end of first portion
331: first region
332: second region
34: second portion
34a: one end of second portion
34b: other end of second portion
35: positive electrode end portion
x: width direction
y: length direction
z: lamination direction
L1: cutting line
L2: cutting line

## Claims

1. A lithium secondary battery comprising:
a positive electrode and a negative electrode which face each other with a separator being interposed between the positive electrode and the negative electrode,
wherein the positive electrode includes a positive electrode current collector configured to sandwich a resin layer between a first metal layer and a second metal layer, and a positive-electrode active material layer provided on the positive electrode current collector,
the first metal layer includes a first portion in which the positive-electrode active material layer is not provided,
the second metal layer includes a second portion in which the positive-electrode active material layer is not provided, and
the first portion and the second portion have different dimensions in both a width direction and a length direction.

2. The lithium secondary battery according to Claim 1,
wherein the first portion includes one end and the other end in the length direction, the one end of the first portion overlaps with the negative electrode in a plan view, and the other end of the first portion does not overlap with the negative electrode in the plan view, and
the second portion includes one end and the other end in the length direction, the one end of the second portion overlaps with the negative electrode in a plan view, and the other end of the second portion does not overlap with the negative electrode in the plan view.

3. The lithium secondary battery according to Claim 2, wherein the one end of the first portion and the one end of the second portion have different width dimensions.

4. The lithium secondary battery according to Claim 3, wherein the other end of the first portion and the other end of the second portion have the same width dimension.

5. The lithium secondary battery according to Claim 2, wherein the one end of the first portion has the same width dimension as a portion of the first metal layer in which the positive-electrode active material layer is provided.

6. The lithium secondary battery according to Claim 5, wherein the one end of the second portion has a smaller width dimension than a portion of the second metal layer in which the positive-electrode active material layer is provided.

7. The lithium secondary battery according to Claim 1, wherein the first portion includes a first rectangular region having a first width dimension and a second rectangular region having a second width dimension smaller than the first width dimension.

8. The lithium secondary battery according to Claim 7, wherein the first width dimension is the same as a width dimension of a portion of the first metal layer in which the positive-electrode active material layer is provided.

9. The lithium secondary battery according to Claim 7, wherein the second portion includes a rectangular region having the same shape as the second rectangular region.

10. The lithium secondary battery according to Claim 1,
wherein the first portion includes one end and the other end in the length direction,
the second portion includes one end and the other end in the length direction,
the negative electrode includes one end and the other end in the length direction, and
the one end of the negative electrode is disposed between the one end of the first portion and the other end of the first portion in a plan view, and disposed between the one end of the second portion and the other end of the second portion in the plan view.

11. The lithium secondary battery according to Claim 10, wherein a distance in the plan view from the one end of the first portion to the one end of the negative electrode is longer than a distance in the plan view from the one end of the second portion to the one end of the negative electrode.

12. The lithium secondary battery according to Claim 11, wherein the distance in the plan view from the one end of the first portion to the one end of the negative electrode is 3 mm or less.

13. The lithium secondary battery according to Claim 12, wherein the distance in the plan view from the one end of the second portion to the one end of the negative electrode is 0.25 mm or more.

14. A lithium secondary battery comprising:
a positive electrode and a negative electrode which face each other with a separator being interposed between the positive electrode and the negative electrode,
wherein the positive electrode includes a positive electrode current collector configured to sandwich a resin layer between a first metal layer and a second metal layer, and a positive-electrode active material layer provided on the positive electrode current collector, and
the first metal layer includes a first portion in which the positive-electrode active material layer is not provided, the first portion includes a first region and a second region, the first region has one end and the other end in a length direction and has a first width dimension, and the second region extends in the length direction from a part of the other end of the first region and has a second width dimension smaller than the first width dimension.

15. The lithium secondary battery according to Claim 14, wherein the first region entirely overlaps with the negative electrode in a plan view, and the second region partially overlaps with the negative electrode and partially does not overlap with the negative electrode in the plan view.

16. The lithium secondary battery according to Claim 14, wherein the second metal layer includes a second portion in which the positive-electrode active material layer is not provided, and the second portion includes a region having the same shape as the second region.

17. The lithium secondary battery according to any one of Claims 1 to 16, wherein the negative electrode includes a negative electrode current collector and a negative-electrode active material layer provided on the negative electrode current collector.

18. The lithium secondary battery according to any one of Claims 1 to 16, wherein the negative electrode includes a negative electrode current collector configured to sandwich a resin layer between a pair of metal layers.

19. The lithium secondary battery according to any one of Claims 1 to 16, wherein a laminate in which a plurality of sets of the positive electrode, the separator, and the negative electrode is laminated is provided.

20. A method for manufacturing a lithium secondary battery, the method comprising:
preparing a positive electrode material, in which the positive electrode material includes a positive electrode current collector configured to sandwich a resin layer between a first metal layer and a second metal layer, and a positive-electrode active material layer provided on the positive electrode current collector; and
cutting out the positive electrode material to form a positive electrode, in which in the positive electrode, the first metal layer includes a first portion in which the positive-electrode active material layer is not provided, the second metal layer includes a second portion in which the positive-electrode active material layer is not provided, and the first portion and the second portion have different dimensions in both a width direction and a length direction.
